(19) Europäisches Patentamt
European Patent Office
Office européen des brevets

(11) EP 4 530 985 A1

(12) EUROPEAN PATENT APPLICATION

(43) Date of publication:
02.04.2025 Bulletin 2025/14

(21) Application number: 24199471.4

(22) Date of filing: 10.09.2024

(51) International Patent Classification (IPC):
G06T 7/73 (2017.01)

(52) Cooperative Patent Classification (CPC):
G06T 7/73; G06V 10/82; G06V 40/103;
G06T 2207/20081; G06T 2207/20084;
G06T 2207/30196

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.09.2023 GB 202314071

(71) Applicant: Sony Group Corporation
Tokyo 108-0075 (JP)

(72) Inventors:
• MOLINER, Oliver
Basingstoke, RG22 4SB (GB)
• HUANG, Sangxia
Basingstoke, RG22 4SB (GB)

(74) Representative: D Young & Co LLP
3 Noble Street
London EC2V 7BQ (GB)

(54) **DATA PROCESSING APPARATUS AND COMPUTER-IMPLEMENTED METHOD**

(57) A computer-implemented method of determining a three-dimensional (3D) pose, the method comprising: obtaining two-dimensional (2D) pose information, the 2D pose information indicating a position of a plurality of joints of an object in each of a plurality of 2D images of the object captured from different respective viewpoints at one or more times; generating a set of input tokens, each input token indicating a position of one of the joints in one of the images, a classification of the joint and a time at which the image was captured, the position of the joint being defined as a ray passing through the 2D position of the joint in the image and a camera centre of the image; inputting the set of input tokens to an encoder of a transformer, the encoder comprising a multi-head self-attention mechanism; generating a query indicating a classification and a time for one or more joints for which a 3D position is to be predicted; and inputting the query and an output of the encoder to a decoder of the transformer to generate, as an output of the decoder, a predicted 3D position of the one or more joints of the query, the decoder comprising a multi-head cross-attention mechanism; wherein the multi-head self-attention mechanism of the encoder is biased according to at least one of a distance between the rays representing the positions of the joints of the input tokens and a confidence of the 2D position of the joint of each input token.

FIG. 5

**Description**

**BACKGROUND**

Field of the Disclosure

The present disclosure relates to a data processing apparatus and computer-implemented method.

Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

3D (three-dimensional) human pose estimation is a fundamental problem in computer vision and has many applications including, for example, robotics, virtual reality, sports analytics and video surveillance. Accurate 3D pose estimation is essential for many of these applications, as it enables understanding of human motion, behaviour and interaction with the environment.

Typically, existing multi-view 3D human pose reconstruction techniques work following a two-step pipeline. They first estimate 2D (two-dimensional) poses from the different views and recover the 3D poses via triangulation [5] [14] [19] [9] [3] [1] or using Pictorial Structure Models [13] [20]. As the second step depends on the accuracy of the 2D pose estimation from the first step, which may suffer from motion blur, occlusions, self-occlusions or the like, many approaches have focused on enhancing 2D pose estimation by fusing information from the views at different stages of the pose detection model. This requires transmitting the images or intermediate high-dimensional features from all cameras to a centralized processing unit to perform the fusion, which may not be desirable or feasible in a distributed real-time system (e.g. due to the high processing and/or bandwidth requirements).

There is therefore a desire for a more efficient and accurate method of 3D human pose estimation.

**SUMMARY**

The present disclosure is defined by the claims.

**BRIEF DESCRIPTION OF THE DRAWINGS**

Non-limiting embodiments and advantages of the present disclosure are explained with reference to the following detailed description taken in conjunction with the accompanying drawings, wherein:

    Fig. 1 schematically shows an example data processing apparatus;
    Fig. 2 schematically shows an example transformer;
    Fig. 3 schematically shows an example biased multi-head self-attention mechanism;
    Figs. 4A to 4D show example experimental results; and
    Fig. 5 shows an example method.

Like reference numerals designate identical or corresponding parts throughout the drawings.

**DETAILED DESCRIPTION OF THE EMBODIMENTS**

The present technique addresses how to reconstruct 3D human poses from multiple views using only 2D skeletons as input, which can be estimated at edge nodes near the cameras and efficiently transmitted to a fusing node. Multi-view 3D pose reconstruction is treated as a regression problem and a transformer-based model (implemented at the fusing node) is trained to predict the 3D coordinates of the body joints directly. Features to enable the model to handle corrupted 2D input poses and to generalize to different camera configurations are also described.

In summary, any suitable known (off-the-shelf) 2D human pose detector (such as that described in [16]) is used to extract 2D skeletons from a sequence of multi-view images capturing the same scene from different angles. These 2D poses are decomposed into individual joints (e.g. right elbow, left elbow, hip, left knee, right knee, etc.) represented as rays originating from each camera and projected independently to a higher dimensional representation space. This set of joint feature vectors are refined via self-attention in a transformer encoder to obtain a global set-latent representation. Output 3D poses are then predicted in a transformer decoder by querying the global set-latent representation with a set of target feature vectors describing the semantics of the points to decode.

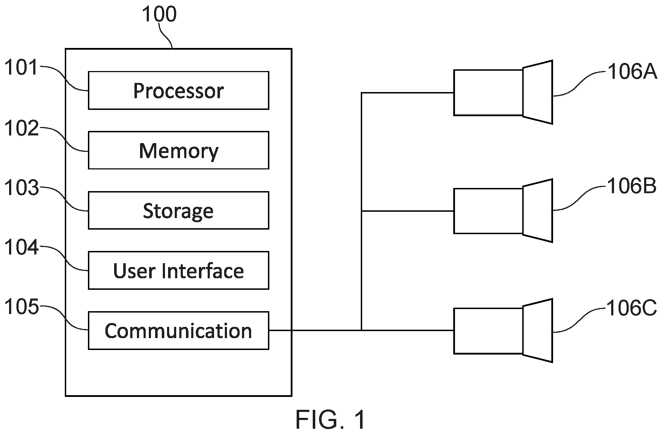

Fig. 1 schematically shows an example data processing apparatus / device 100 for implementing the transformer-based model. It comprises a processor 101 for executing electronic instructions, a memory 102 for storing the electronic instructions to be executed and electronic input and output information associated with the electronic instructions, a storage medium 103 (e.g. a hard disk drive or solid state drive) for long term storage of information, a user interface 104 (e.g. a touch screen, a non-touch screen, buttons, a keyboard and/or a mouse) for receiving commands from and/or outputting information to a user and a communication interface 105 for sending electronic information to and/or receiving electronic information from one or more other apparatuses.

In this example, the one or more other apparatuses include a plurality of cameras 106A to 106C which are positioned to capture images of the same scene (in particular, the same person whose pose is to be estimated) from different angles.

Each of the processor 101, memory 102, storage medium 103, user interface 104 and communication interface 105 are implemented using appropriate circuitry, for example. The processor 101 controls the operation of each of the memory 102, storage medium 103, user interface 104 and communication interface 205.

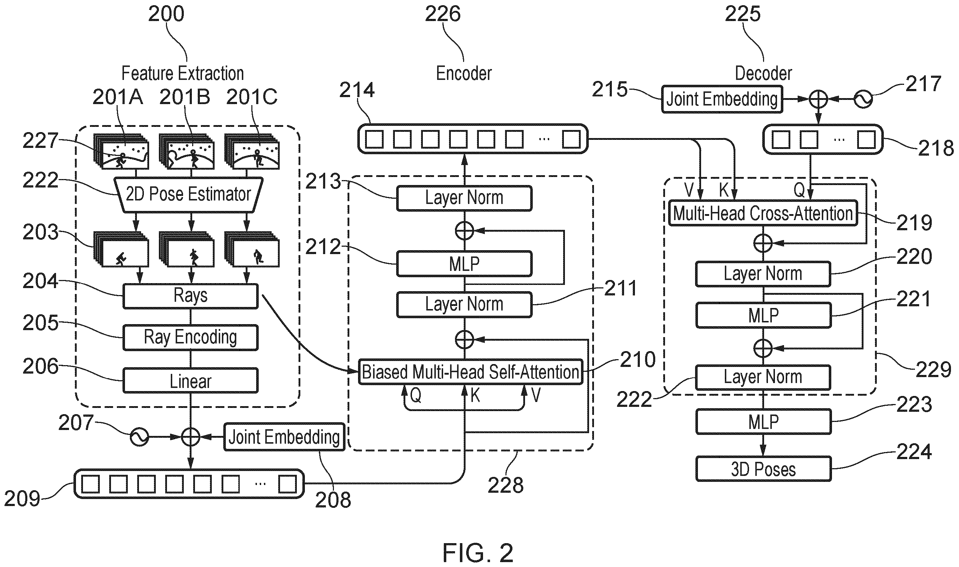

Fig. 2 schematically shows operations of an example machine-learning model implemented by the apparatus 100 (in particular, by processor 101). The machine learning model comprises a feature extraction operation 200, an encoder operation 226 and a decoder operation 225.

The encoder 226 is a transformer with $L_e$ layers (with the layers denoted 228 being repeated $L_e$ times). Each layer applies a global multi-head self-attention (MHSA) operation 210 followed by a multi-layer perceptron (MLP) 212. The encoder is given as input a set of tokens 209. These tokens are the feature vectors for the rays corresponding to each body joint in each camera view at each time frame, augmented with temporal and joint identifier (ID) embeddings. The encoder uses global attention to refine the tokens which means that, at each encoder layer, each token attends to every other token.

As will be explained in more detail, the transformer architecture is extended to allow the encoder 226 to be guided using prior knowledge.

Firstly, a geometry bias is added to the attention matrix. This bias is calculated using the distances between all the rays. This gives more importance to rays that are closer to each other in the 3D space, i.e. rays corresponding to the same body joint seen from different cameras. It also gives more importance to rays corresponding to all the joints of the body seen by the same camera. The geometry bias is weighted by a learnable weight at each encoder layer.

Secondly, the attention matrix is also biased with the confidence scores of the 2D detections. The confidence score is an additional output of known 2D pose estimation algorithms and indicates the confidence of a joint detection in a 2D image. A low score may indicate, for example, that a particular joint was difficult to observe due to motion blur, occlusions or the like. The confidence of the key joints is added to the attention matrix. Here, the bias is also weighted by a learnable weight at each encoder layer.

The decoder 225 is also a transformer. It produces the final 3D poses by attending to the set of features produced by the encoder 226 with $L_d$ layers of multi-head cross-attention (MHCA) 219 using a query Q (with the layers denoted 229 being repeated $L_d$ times). The query Q provides the semantics of the desired output (joint ID, time stamp). The query comprises J learned embedding vectors corresponding to each joint of the body, repeated $T_{out}$ times, where $T_{out}$ is the desired time range to decode. Temporal encoding is added to these vectors. This makes the system highly flexible, as the query Q does not need to have the same number of frames or the same number of joints as the input 209.

Fig. 2 is now explained in more detail.

A sequence of captured images is received from each camera. In this example, image sequence 201A is received from camera 106A, image sequence 201B is received from camera 106B and image sequence 201C is received from camera 106C. Each image sequence comprises one or more images captured at a respective time. A set of images simultaneously captured by the cameras at a given time corresponds to an input frame.

Each image includes an image of a person 227 whose pose is to be estimated.

Each image is input to the 2D human pose detector 202 (2D pose estimator). The output is a 2D pose 203 of the person 227 for each image. The 2D pose for each image comprises the 2D position (e.g. in pixel coordinates *(u, v))* of each detected joint in that image.

The 2D human pose detector 202 obtains 2D pose predictions 203 for each image, yielding a sequence

$$\mathbf{S} \in \mathbb{R}^{T_{in} \times C \times J \times 3}$$

of 2D joint positions and corresponding detection confidence scores. Here, J is the number of joints of the detected poses and $T_{in}$ is the number of input frames. Each joint at each camera at each input frame is associated with 3 values, the 2D joint position (two values) and the confidence score.

The 2D joint positions are passed to the ray determiner 204, which uses the extrinsic and intrinsic matrices of the cameras to transform the 2D joint positions into 3D rays passing through the 2D joint positions and corresponding camera centres

In more detail, the 2D joint positions are input to the ray determiner 204 along with the extrinsic camera matrices

$$\{\mathbf{E}_c = [\mathbf{R}_c|\mathbf{t}_c] \in SE(3)\}_{c=1}^C$$

and intrinsic camera matrices

$$\{\mathbf{K}_c \in \mathbb{R}^{3\times3}\}_{c=1}^C$$

The positions and properties of the cameras necessary for generating the extrinsic and intrinsic matrices are determined in advance. Here, C is the number of cameras (so C = 3 in the example of Fig. 1) and SE(3) is the three-dimensional Special Euclidean group.

The Plücker representation for the rays [12] [6] [15] [18] is used for the rays, as this allows the ray representation to be decoupled from the positions of the camera centres along the rays, thus promoting generalization.

Specifically, for a joint $j$ with pixel coordinates $(u, v)$ in camera c, the Plücker coordinates

$$\mathbf{r}_{j,c} \in \mathbb{R}^6$$

of the corresponding ray are given as

$$\mathbf{r}_{j,c} = (\mathbf{d}_{j,c}, \mathbf{m}_{j,c}) = (\tilde{\mathbf{d}}_{j,c}, \mathbf{t}_c \times \tilde{\mathbf{d}}_{j,c})/\|\tilde{\mathbf{d}}_{j,c}\|,$$

where $\tilde{d}_{j,c}$ is the ray direction:

$$\tilde{\mathbf{d}}_{j,c} = \mathbf{R}_c^{-1}\mathbf{K}_c^{-1}\begin{pmatrix} u \\ v \\ 1 \end{pmatrix}.$$

Ray encoder 205 then generates ray embeddings

$$\mathbf{f}_{j,c} = \mathbf{W}(h(\mathbf{r}_{j,c}))$$

where h(.) denotes harmonic embedding [11] and W is a linear projection layer.

The ray embedding is then output via a further linear layer 206 and augmented with a sinusoidal temporal embedding 207 (indicating the time the relevant image / frame was captured) and a joint embedding 208 (indicating the type of joint, e.g. right knee, left elbow, hip, etc.) to which the ray corresponds to form a feature vector. The feature vector is a token of the set of tokens 209 which is then input to the encoder 226. Each of the tokens in the set of tokens is a feature vector.

In an example, for any missing joints (e.g. if a particular joint is not detected in one of the cameras C at one of the times $T_{in}$), an all-zero ray vector (or suitable learned encoding) is generated by the ray determiner 204 (that is, before ray embedding and temporal embedding). Missing joints may occur if, for example, at least a portion of a person is not visible in one or more of the camera views at one or more of the times $T_{in}$.

As mentioned, the encoder 226 (see e.g. [17]) consists of $L_e$ layers of global multi-head self-attention. All input feature vectors are tokens attending to one another. This allows to model long-range relationships between body joints, across views and along the time dimension simultaneously, providing global context to each token.

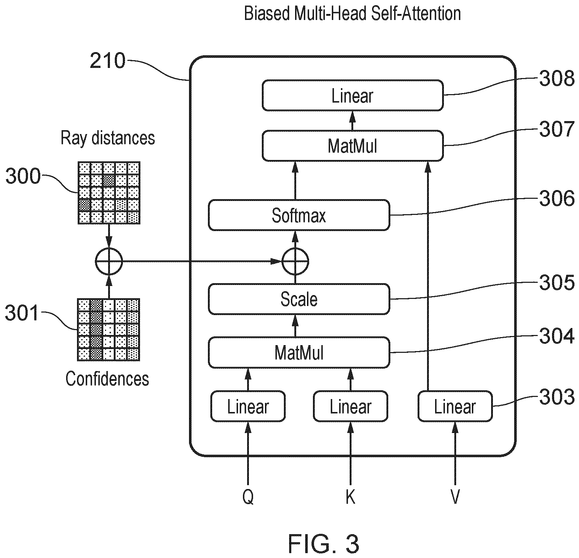

When refining input representations with self-attention, a transformer learns what other tokens are important for a given token. With the present technique, the transformer is further guided during self-attention. This occurs via the biased multi-head self-attention operation 210, which is explained in more detail with reference to Fig. 3.

Fig. 3 shows further components of the biased multi-head self-attention operation 210. The Query (Q) and Key (K) of the input set of tokens 209 is provided to a matrix multiplication layer 304. The output of the matrix multiplication layer 304 is scaled as necessary by the scaling layer 305 (to form an attention matrix). Prior to inputting the output of the scaling layer 305 to the softmax layer 306, however, additional information about the relationship between each of the input tokens is provided. This is in the form of ray distances 300 and confidences 301 (each taking the form of a matrix with the same dimensions as the attention matrix output by the scaling layer 305).

Regarding the ray distances 300, the distances between rays is used to provide a geometry bias to self-attention mechanism. Geometry bias is discussed in [18], for example. The distances between all rays using their Plücker representations is given by:

$$d(\mathbf{r}_q, \mathbf{r}_k) = \begin{cases} \frac{|\mathbf{d}_q \cdot \mathbf{m}_k + \mathbf{d}_k \cdot \mathbf{m}_q|}{||\mathbf{d}_q \times \mathbf{d}_k||_2}, & \mathbf{d}_q \times \mathbf{d}_k \neq 0 \\ ||\mathbf{d}_q \times (\mathbf{m}_q - \mathbf{m}_k)||, & \text{otherwise.} \end{cases}$$

The matrix of the ray distances 300 (ray distance matrix) is populated with these values.

Regarding the confidences 301, as previously mentioned, the 2D human pose detector 202 provides a measure of the reliability of each joint's predicted coordinates in the form of a confidence score. When determining the amount by which each token attends to each other token, it is desirable to give more weight to joints with higher confidence scores. The confidence scores of the 2D human pose detector 202 are used to generate the confidences 301 as a confidence matrix. Each row of the confidence matrix is a repeat of a confidence vector of the input rays (the confidence vector being a vector indicating the confidence score of the detected joint of each input token). The confidence matrix may be expressed as the product

$$\mathbb{1} * \mathbf{c}^T$$

where c is the confidence vector of the input rays (with each element of c taking a value between 1 (absolute confidence) and 0 (no confidence), for example).

The ray distance matrix and confidence matrix are added together and the resulting matrix added to the attention matrix output by the scaling layer 305. This generates the biased attention matrix. The biased attention matrix is then provided to the softmax layer 306. The output of the softmax layer 306 is input with the Value (V) of the input set of tokens to matrix multiplication layer 307. The output of the matrix multiplication layer 307 is then output to linear layer 308. It will be appreciated that performance (compared to where no bias is used) may be improved by biasing the attention matrix using only one of the ray distance matrix and confidence matrix. Performance is most improved, however, by using both the ray distance matrix and confidence matrix.

Looking back to Fig. 2, the output of the linear layer 308 is added to the matrix representing the set of input tokens and the result provided to layer normalisation 211. The output of layer normalisation 211 is provided to MLP 212. The output of the MLP 212 is added to the output of the layer normalisation 211. The resulting matrix is then provided to layer normalisation 213. The output of the layer normalisation 213 (taking into account there are $L_e$ encoder layers) forms the encoding 214. The encoding 214 is a refined representation of the set of input tokens 209 taking into account how much each token attends to every other token (which, itself, takes into account the ray distances 300 and confidences 301).

To reconstruct a 3D pose sequence from the encoding 214, a set of $T_{out} \times J$ query vectors is constructed, where $T_{out}$ is the length of the sequence to decode. The transformer decoder 225 produces a set of $T_{out} \times J$ joint representations by attending to the set of features with $L_d$ layers of multi-head cross-attention 219 using a predefined query Q and Key (K) and Value (V) corresponding to the encoding 214.

The query Q provides the semantics of each joint to be decoded. The semantics are the joint ID (indicated by the joint embedding 215) and time (indicated by the sinusoidal temporal embedding 217). The query Q thus indicates J learned embedding vectors of size $1 \times D$ (D being the length of the joint type embedding) corresponding to each joint of the body, repeated $T_{out}$ times, where $T_{out}$ is the desired time range to decode. This set of vectors is shown as 218.

This allows the present technique to be highly flexible, since the query Q at the decoder 225 query does not need to have the same number of frames as the set of input tokens. It also does not need to have the same number of joints.

The output of the multi-head cross attention 219 is added to the query Q. This is then input to layer normalisation 220. The output of the layer normalisation is output to MLP 221. The output of MLP 221 is combined with the output of the layer normalisation 220. This is then input to layer normalisation 222. The output of the layer normalisation 222 (taking into account there are $L_d$ decoder layers, with the layers ) is then output to MLP 223. The output of MLP 223 provides the predicted 3D poses 224. The predicted 3D poses are defined in a predetermined world coordinate system (e.g. using canonical coordinates), for example. If scene centering is used (as described below), the predicted 3D pose at the current time step is predicted in a coordinate system centered on the predicted 3D pose of the previous time step and then translated to the world coordinate system. The predicted 3D pose at each time step comprises the predicted 3D position of each of the J joints at that time step.

The model is trained by minimizing the Mean Squared Error (MSE)

$$\mathcal{L} = \sum_{i=1}^{N} \sum_{t=1}^{T_{out}} \sum_{j=1}^{J} \| P_{itj} - \hat{P}_{itj} \|^2$$

where $P_{itj}$ is the ground-truth 3D, $\hat{P}_{itj}$ is the corresponding 3D joint predicted by the model and N is the total number of 3D pose sequences in the training dataset (each 3D pose sequence in the training data set comprising the position of each the J joints at each of the $T_{out}$ time steps). The model is trained to reconstruct a whole sequence of length $T_{out} = T_{in}$ without causal masking. All N 3D pose sequences in the training dataset are iterated through and, for each of these 3D pose sequences, the pose at $T_{out}$ and the $T_{out}$ - 1 previous poses are reconstructed. During inference, $T_{in}$ frames of observations are input (corresponding to the latest observation and $T_{in}$ - 1 past observations, with $T_{in}$ being between 1 and 9, for example) and, for example, one 3D pose corresponding to the latest frame is predicted. The model is thus able to make fully causal predictions and is well-suited for real-time inference.

To promote generalization to different scene sizes and camera configurations, scene centering and the generation of synthetic views may be used during training.

Regarding scene centering, to enable the model to generalize to scenes of arbitrary sizes, the scene is centered (at least approximately) around the person during training and inference. During training, given a pair of observation and ground-truth sequences of length $T,$ a random ground-truth pose is selected at time $t$ and the projection of the neck joint on the floor is set as the origin (random noise is added on the plane). All observation rays and ground-truth poses are transformed to a coordinate system centered on that point. Additionally, the scene is rotated around the vertical axis with a random angle.

In an example, during inference, at the first frame, the 3D rays are centered around a point obtained by triangulation of the observations without rotating the scene. At subsequent time frames, the coordinate system is centered around the predicted 3D pose obtained at the previous time step. Transforming the scene to a body-centric reference frame in this way allows the model to better generalize to scenes with unseen dimensions and camera configurations.

Regarding the generation of synthetic views, existing datasets with ground-truth 3D pose annotations for real-world images may not be large enough to capture the variability of images / video sequences that may be encountered at test time. This can limit the generalization capabilities of a pose estimation method. One way to mitigate this issue is to use synthetic data. During training, in addition to the 2D observations provided by the datasets, synthetic observations may be generated using the ground-truth 3D poses by sampling random camera positions and calculating the rays passing through these and each joint of the ground truth body.

The present technique has been evaluated on two large-scale multi-view datasets for multi-view 3D human pose estimation: Human3.6M [4] and CMU Panoptic [7]. A comprehensive comparison with current state-of-the-art methods has been performed and ablation studies to validate the effectiveness of the components of present technique have been conducted.

Human 3.6M [4] consists of 3.6 million images of 11 subjects performing various activities in an indoor environment, with corresponding 3D poses. The images are captured at 50 Hz by 4 synchronized cameras, while the ground truth 3D pose annotations are obtained by a marker-based motion capture system. Following standard practice, 5 subjects were used for training (S1, S5, S6, S7, S8) and 2 subjects were used for testing (S9, S11).

CMU Panoptic [7] contains multiple scenes in which people perform different activities in an indoor environment. Images are captured by hundreds of VGA cameras and 31 HD cameras installed on a dome structure, and the 3D pose annotations are obtained by triangulation. The same train / test sequences as [5] were used, consisting of scenes featuring a single person. Unless otherwise stated, 4 HD cameras (2,13,10,19) were used for testing and up to 27 HD cameras for training, with no overlap.

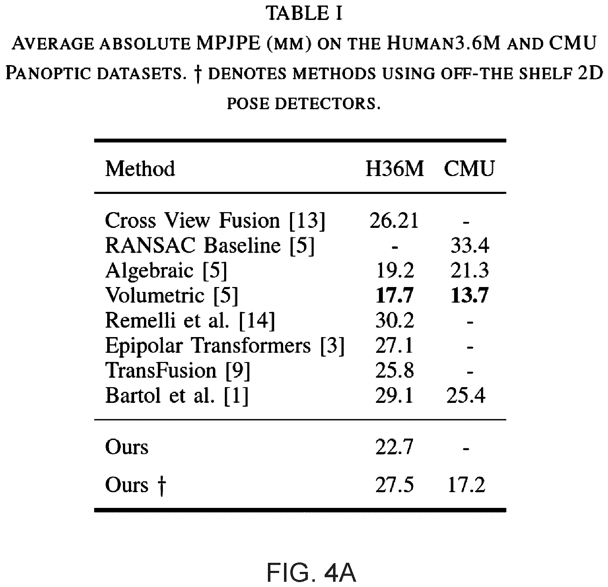

Results of the experiments are shown in the tables of Figs. 4A to 4D.

The 3D pose reconstruction accuracy is evaluated using the Mean Per Joint Position Error (MPJPE), which is the average of the L2 distance between the prediction and the ground truth for each joint, measured in millimetres.

The images are undistorted using the camera parameters provided with the datasets and the 2D poses extracted with HRNet-W32 [16] with YoloX [2] box proposals. The pose detector is pre-trained on COCO and remains frozen when training the network. 3 layers for the transformer encoder (so $L_e = 3$) and 2 layers for the transformer decoder (so $L_d = 2$). Both encoder and decoder have 6 attention heads. During training, 9 time frames and 2 randomly sampled views are input and 9 time frames are output. During evaluation, 9 time frames and up to 4 views are input and only 1 frame is output, corresponding to the latest observation.

The model is trained with the Adam optimizer [8] for 300000 iterations with a mini-batch size of 256. The initial learning rate is 10-4. After a warmup phase of 10000 steps, it is decayed over 300000 training steps.

The table of Fig 4A is a comparison of the present technique (labelled "Ours") to previous work (including existing methods that use 2D detectors fine-tuned on target datasets without much occlusion (so triangulation will typically work well)).

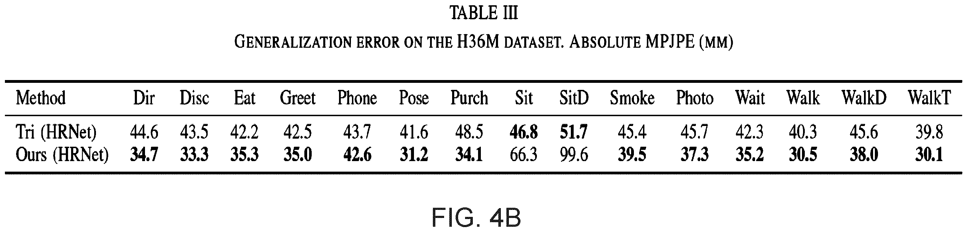

The table of Fig 4B demonstrates how the present technique (again, labelled "Ours") provides improved performance for a majority of different poses. In this particular example, improved performance is shown for all labelled pose sequences except the two sitting sequences "Sit" and "SitD" (which, this particular example, contain pose sequences not seen in the training dataset).

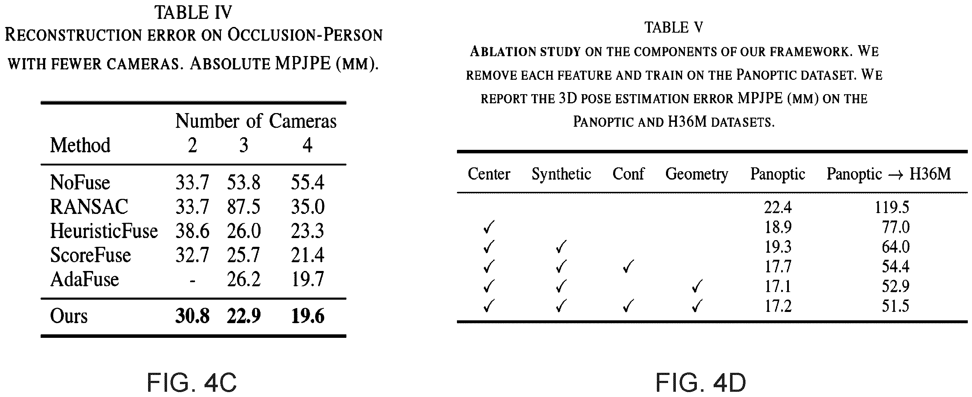

The table of Fig. 4C shows an improvement in the accuracy of 3D pose determination according to the present technique (again, labelled "Ours") compared to existing methods (which, for example, work by adjusting 2D pose predictions and using simple triangulation). The improvement is particularly notable when there is a lower number of cameras (viewpoints).

The usefulness of the components of the method may be evaluated by removing them in turn. For each ablation, the model is trained on the training set of CMU Panoptic and evaluated on the test set of CMU Panoptic as well as on H36M. As seen in the table of Fig. 4D, removing both the geometry and confidence bias leads to a worse reconstruction accuracy. Furthermore, removing the synthetic views and use of scene centering (as described above) results in a considerable drop in inter-dataset generalization performance.

The above-mentioned examples relate to predicted the 3D pose of a single person. The present technique may be extended to predicted the 3D pose of multiple people in a set of 2D captured images. In this case, an additional step of detecting which set of 2D joint positions correspond to which person is performed (e.g. by matching corresponding poses in images captured by different cameras at the same time, e.g. as described in [21]). Once the 2D joint positions of each person have been determined, the steps of Fig. 2 are repeated separately for each person. This allows the 3D pose of multiple people in a scene to be predicted in real time.

Although the given examples relate to human pose estimation, it will be appreciated that, depending on the training data, the present technique may be used to determine non-human poses (e.g. poses of non-human animals or the like).

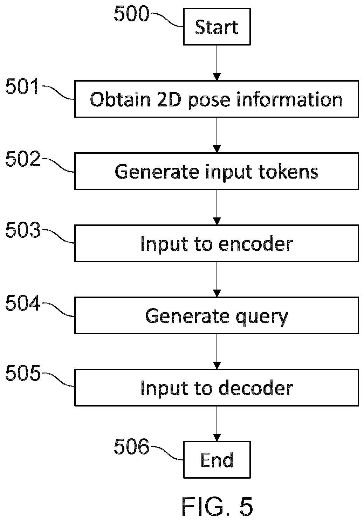

Fig. 5 shows an example method of determining a three-dimensional (3D) pose. The method is a computer-implemented method executed by the processor 101 of data processing apparatus 100, for example.

The method starts at step 500.

At step 501, two-dimensional (2D) pose information is obtained. The 2D pose information indicates a position of a plurality of joints of an object in each of a plurality of 2D images of the object captured from different respective viewpoints at one or more times (e.g. $T_{in}$ times).

At step 502, a set of input tokens (e.g. input tokens 209) is generated. Each input token indicates a position of one of the joints in one of the images, a classification of the joint (e.g. through joint embedding 208) and a time at which the image was captured (e.g. through sinusoidal temporal embedding 207). The position of the joint of each input token is defined as a ray passing through the 2D position of the joint in the image and a camera centre of the image. The ray is represented using Plücker coordinates, for example.

At step 503, the set of input tokens is input to an encoder of a transformer (e.g. encoder 226). The encoder comprises a multi-head self-attention mechanism (e.g. multi-head self-attention mechanism 210). The multi-head self-attention mechanism of the encoder is biased according to at least one of a distance between the rays representing the positions of the joints of the input tokens (e.g. represented by the ray distance matrix) and a confidence of the 2D position of the joint of each input token (e.g. represented by the confidence matrix).

At step 504, a query (e.g. query Q generated from the set of vectors 218) is generated indicating a classification (e.g. via joint embedding 215) and a time (e.g. via sinusoidal temporal embedding 217) for one or more joints (e.g. Jjoints) for which a 3D position is to be predicted. The query may include joint classifications at multiple times $T_{out}$ ($T_{out}$ representing a time range over which predictions are desired, for example).

At step 505, the query and an output of the encoder are input to a decoder of the transformer (e.g. decoder 225) to generate, as an output of the decoder, a predicted 3D position of the one or more joints of the query (e.g. predicted 3D poses 224). The decoder comprises a multi-head cross-attention mechanism (e.g. multi-head cross-attention mechanism 219).

The method ends at step 506.

The present technique thus allows 3D poses to be determined from multiple views using only 2D pose information. The 2D pose information may be estimated at edge nodes at or near the cameras. For example, each edge node may be a data processing apparatus (not shown) connected between each of the cameras 106A to 106C and data processing apparatus 100. Each edge node receives a captured image from its respective camera, performs 2D pose estimation and transmits the determined 2D pose information to the data processing apparatus 100. The 2D pose information is represented by a significantly smaller amount of data than captured images. Network resources are therefore conserved.

The 3D pose prediction is then carried out by the data processing apparatus 100 (which acts as a central fusing node) using the above-described trained transformer-based model. No information from the captured images other than the received 2D pose information (and joint and time step information for the desired 3D pose prediction(s)) therefore needs to be processed. The processing burden at the fusing node is therefore alleviated. At the same time, the accuracy of the 3D pose prediction remains high.

The present technique thus allows accurate 3D pose information to be determined from multiple 2D views while making more efficient use of network and processing resources.

Example(s) of the present disclosure are defined by the following numbered clauses:

1. A computer-implemented method of determining a three-dimensional (3D) pose, the method comprising:

obtaining two-dimensional (2D) pose information, the 2D pose information indicating a position of a plurality of joints of an object in each of a plurality of 2D images of the object captured from different respective viewpoints at one or more times;

generating a set of input tokens, each input token indicating a position of one of the joints in one of the images, a classification of the joint and a time at which the image was captured, the position of the joint being defined as a ray passing through the 2D position of the joint in the image and a camera centre of the image;

inputting the set of input tokens to an encoder of a transformer, the encoder comprising a multi-head self-attention mechanism;

generating a query indicating a classification and a time for one or more joints for which a 3D position is to be predicted; and

inputting the query and an output of the encoder to a decoder of the transformer to generate, as an output of the decoder, a predicted 3D position of the one or more joints of the query, the decoder comprising a multi-head cross-attention mechanism;

wherein the multi-head self-attention mechanism of the encoder is biased according to at least one of a distance between the rays representing the positions of the joints of the input tokens and a confidence of the 2D position of the joint of each input token.

2. A computer-implemented method according to clause 1, wherein, for a joint j with pixel coordinates $(u, v)$ in camera c, the ray is represented by Plücker coordinates

$$\mathbf{r}_{j,c} \in \mathbb{R}^6$$

where

$$\mathbf{r}_{j,c} = (\mathbf{d}_{j,c}, \mathbf{m}_{j,c}) = (\tilde{\mathbf{d}}_{j,c}, \mathbf{t}_c \times \tilde{\mathbf{d}}_{j,c}) / \|\tilde{\mathbf{d}}_{j,c}\|,$$

where $\tilde{d}_{j,c}$ is the ray direction:

$$\tilde{\mathbf{d}}_{j,c} = \mathbf{R}_c^{-1} \mathbf{K}_c^{-1} \begin{pmatrix} u \\ v \\ 1 \end{pmatrix}.$$

wherein

$$[\mathbf{R}_c | \mathbf{t}_c]$$

is an extrinsic camera matrix and wherein

$$\mathbf{K}_c$$

is an intrinsic camera matrix.

3. A computer-implemented method according to clause 2, wherein the distance between two rays $r_q$, $r_k$ respectively representing the positions of the joints of two input tokens is given by:

$$d(\mathbf{r}_q, \mathbf{r}_k) = \begin{cases} \dfrac{|\mathbf{d}_q \cdot \mathbf{m}_k + \mathbf{d}_k \cdot \mathbf{m}_q|}{\|\mathbf{d}_q \times \mathbf{d}_k\|_2}, & \mathbf{d}_q \times \mathbf{d}_k \neq 0 \\ \|\mathbf{d}_q \times (\mathbf{m}_q - \mathbf{m}_k)\|, & \text{otherwise.} \end{cases}$$

4. A computer-implemented method according to clause 3, wherein:

the distances between each of the rays representing the positions of the joints of the input tokens form the elements of a ray distance matrix; and
the ray distance matrix is added to an attention matrix of the multi-head self-attention mechanism of the encoder.

5. A computer-implemented method according to any preceding clause, wherein:

the confidence of the 2D position of the joint of each input token forms a respective element of a confidence vector;
a confidence matrix is formed by repeating the confidence vector a number of times equal to the number of input tokens; and
the confidence matrix is added to an attention matrix of the multi-head self-attention mechanism of the encoder.

6. A computer-implemented method according to clauses 4 and 5, wherein the attention matrix and confidence matrix are added to the attention matrix of the multi-head self-attention mechanism of the encoder.

7. A computer-implemented method according to any preceding clause, wherein the time indicated by the query is a current time and the one or more times at which the 2D pose information is obtained are one or more current and/or previous times.

8. A data processing apparatus for determining a three-dimensional (3D) pose, the data processing apparatus comprising circuitry configured to:

obtain two-dimensional (2D) pose information, the 2D pose information indicating a position of a plurality of joints of an object in each of a plurality of 2D images of the object captured from different respective viewpoints at one or more times;
generate a set of input tokens, each input token indicating a position of one of the joints in one of the images, a classification of the joint and a time at which the image was captured, the position of the joint being defined as a ray passing through the 2D position of the joint in the image and a camera centre of the image;
input the set of input tokens to an encoder of a transformer, the encoder comprising a multi-head self-attention mechanism;
generate a query indicating a classification and a time for one or more joints for which a 3D position is to be predicted; and
input the query and an output of the encoder to a decoder of the transformer to generate, as an output of the decoder, a predicted 3D position of the one or more joints of the query, the decoder comprising a multi-head cross-attention mechanism;
wherein the multi-head self-attention mechanism of the encoder is biased according to at least one of a distance between the rays representing the positions of the joints of the input tokens and a confidence of the 2D position of the joint of each input token.

9. A program for controlling a computer to perform a method according to any one of clauses 1 to 8.

10. A computer-readable storage medium storing a program according to clause 9.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

**REFERENCES**

[1] K. Bartol, D. Bojanić, and T. Petković, "Generalizable Human Pose Triangulation," in *2022 IEEE/CVF Conference on Computer Vision and Pattern Recognition (CVPR),* Jun. 2022, pp. 11018-11027.

[2] Z. Ge, S. Liu, F. Wang, Z. Li, and J. Sun. YOLOX: Exceeding YOLO series in 2021. July 2021.

[3] Y. He, R. Yan, K. Fragkiadaki, and S.-I. Yu, "Epipolar transformers," in Proceedings of the ieee/cvf conference on computer vision and pattern recognition, 2020, pp. 7779-7788.

[4] C. Ionescu, D. Papava, V. Olaru, and C. Sminchisescu. Human3.6M: Large scale datasets and predictive methods for 3D human sensing in natural environments. IEEE Trans. Pattern Anal. Mach. Intell., 36(7):1325-1339, July 2014.

[5] K. Iskakov, E. Burkov, V. Lempitsky, and Y. Malkov, "Learnable Triangulation of Human Pose," in 2019 IEEE/CVF International Conference on Computer Vision (ICCV), Seoul, Korea (South), Oct. 2019. doi: 10.1109/iccv.2019.00781.

[6] Y.-B. Jia. Plücker coordinates for lines in the space. Problem Solver Techniques for Applied Computer Science, Com-S-477/577 Course Handout, 3, 2020.

[7] H. Joo, T. Simon, X. Li, H. Liu, L. Tan, L. Gui, S. Banerjee, T. Godisart, B. Nabbe, I. Matthews, T. Kanade, S. Nobuhara, and Y. Sheikh. Panoptic studio: A massively multiview system for social interaction capture. IEEE transactions on, Dec. 2016.

[8] D. P. Kingma and J. Ba. Adam: A method for stochastic optimization. In Y. Bengio and Y. LeCun, editors, 3rd International Conference on Learning Representations, ICLR 2015, San Diego, CA, USA, May 7-9, 2015, Conference Track Proceedings, 2015.

[9] H. Ma et al., "TransFusion: Cross-view fusion with transformer for 3D human pose estimation," arXiv[cs.CV], Oct. 18, 2021. Accessed: Mar. 10, 2022. [Online]. Available: https://www.bmvc2021-virtualconference.com/assets/papers/0016.pd

[10] H. Ma, Z. Wang, Y. Chen, D. Kong, L. Chen, X. Liu, X. Yan, H. Tang, and X. Xie. PPT: token-pruned pose transformer for monocular and multi-view human pose estimation. In European Conference on Computer Vision, 2022.

[11] B. Mildenhall, P. P. Srinivasan, M. Tancik, J. T. Barron, R. Ramamoorthi, and R. Ng. NeRF: Representing scenes as neural radiance fields for view synthesis. In ECCV, 2020.

[12] J. Plücker. On a New Geometry of Space. Royal Society, 1865.

[13] H. Qiu, C. Wang, J. Wang, N. Wang, and W. Zeng, "Cross View Fusion for 3D Human Pose Estimation," ICCV2019, 2019, Accessed: Jan. 21, 2020. [Online]. Available: https://www.semanticscholar.org/paper/7f13c91e8b79608c6ff2a9908e67467ebf744aee

[14] E. Remelli, S. Han, S. Honari, P. Fua, and R. Wang, "Lightweight Multi-View 3D Pose Estimation through Camera-Disentangled Representation," arXiv [cs.CV], Apr. 05, 2020. [Online]. Available: http://arxiv.org/abs/2004.02186.

[15] V. Sitzmann, S. Rezchikov, W. T. Freeman, J. B. Tenenbaum, and F. Durand. Light field networks: Neural scene representations with Single-Evaluation rendering. In Proc. NeurIPS, 2021.

[16] K. Sun, B. Xiao, D. Liu, and J. Wang. Deep high-resolution representation learning for human pose estimation. In Proceedings of the IEEE/CVF Conference on Computer Vision and Pattern Recognition, pages 5693-5703, 2019.

[17] A. Vaswani, N. Shazeer, N. Parmar, J. Uszkoreit, L. Jones, A. N. Gomez, L. U. Kaiser, and I. Polosukhin. Attention is all you need. In I. Guyon, U. V. Luxburg, S. Bengio, H. Wallach, R. Fergus, S. Vishwanathan, and R. Garnett, editors, Advances in Neural Information Processing Systems, volume 30. Curran Associates, Inc., 2017.

[18] N. Venkat, M. Agarwal, M. Singh, and S. Tulsiani. Geometry-biased transformers for novel view synthesis. Jan. 2023.

[19] Z. Zhang, C. Wang, W. Qiu, W. Qin, and W. Zeng, "AdaFuse: Adaptive Multiview Fusion for Accurate Human Pose Estimation in the Wild," arXiv [cs.CV], Oct. 26, 2020. [Online]. Available: http://arxiv.org/abs/2010.13302.

[20] G. Pavlakos, X. Zhou, K. G. Derpanis, and K. Daniilidis, "Harvesting multiple views for marker-less 3D human pose annotations," in 2017 IEEE Conference on Computer Vision and Pattern Recognition (CVPR), Honolulu, HI, Jul. 2017. doi: 10.1109/cvpr.2017.138.

[21] US patent application US 11501462 B2

**Claims**

1. A computer-implemented method of determining a three-dimensional, 3D, pose, the method comprising:

    obtaining two-dimensional, 2D, pose information, the 2D pose information indicating a position of a plurality of joints of an object in each of a plurality of 2D images of the object captured from different respective viewpoints at one or more times;
    generating a set of input tokens, each input token indicating a position of one of the joints in one of the images, a classification of the joint and a time at which the image was captured, the position of the joint being defined as a ray passing through the 2D position of the joint in the image and a camera centre of the image;
    inputting the set of input tokens to an encoder of a transformer, the encoder comprising a multi-head self-attention mechanism;
    generating a query indicating a classification and a time for one or more joints for which a 3D position is to be predicted; and
    inputting the query and an output of the encoder to a decoder of the transformer to generate, as an output of the decoder, a predicted 3D position of the one or more joints of the query, the decoder comprising a multi-head cross-attention mechanism;
    wherein the multi-head self-attention mechanism of the encoder is biased according to at least one of a distance between the rays representing the positions of the joints of the input tokens and a confidence of the 2D position of the joint of each input token.

2. A computer-implemented method according to claim 1, wherein, for a joint j with pixel coordinates $(u, v)$ in camera c, the ray is represented by Plücker coordinates

$$\mathbf{r}_{j,c} \in \mathbb{R}^6$$

where

$$\mathbf{r}_{j,c} = (\mathbf{d}_{j,c}, \mathbf{m}_{j,c}) = (\tilde{\mathbf{d}}_{j,c}, \mathbf{t}_c \times \tilde{\mathbf{d}}_{j,c})/\|\tilde{\mathbf{d}}_{j,c}\|,$$

where $\tilde{\mathbf{d}}_{j,c}$ is the ray direction:

$$\tilde{\mathbf{d}}_{j,c} = \mathbf{R}_c^{-1}\mathbf{K}_c^{-1}\begin{pmatrix} u \\ v \\ 1 \end{pmatrix}.$$

wherein

$$[\mathbf{R}_c|\mathbf{t}_c]$$

is an extrinsic camera matrix and wherein $K_c$ is an intrinsic camera matrix.

3. A computer-implemented method according to claim 2, wherein the distance between two rays $r_q$, $r_k$ respectively

representing the positions of the joints of two input tokens is given by:

$$d(\mathbf{r}_q, \mathbf{r}_k) = \begin{cases} \frac{|\mathbf{d}_q \cdot \mathbf{m}_k + \mathbf{d}_k \cdot \mathbf{m}_q|}{\|\mathbf{d}_q \times \mathbf{d}_k\|_2}, & \mathbf{d}_q \times \mathbf{d}_k \neq 0 \\ \|\mathbf{d}_q \times (\mathbf{m}_q - \mathbf{m}_k)\|, & \text{otherwise.} \end{cases}$$

4. A computer-implemented method according to claim 3, wherein:

the distances between each of the rays representing the positions of the joints of the input tokens form the elements of a ray distance matrix; and
the ray distance matrix is added to an attention matrix of the multi-head self-attention mechanism of the encoder.

5. A computer-implemented method according to claim 4, wherein:

the confidence of the 2D position of the joint of each input token forms a respective element of a confidence vector;
a confidence matrix is formed by repeating the confidence vector a number of times equal to the number of input tokens; and
the confidence matrix is added to an attention matrix of the multi-head self-attention mechanism of the encoder.

6. A computer-implemented method according to claim 5, wherein the attention matrix and confidence matrix are added to the attention matrix of the multi-head self-attention mechanism of the encoder.

7. A computer-implemented method according to claim 1, wherein the time indicated by the query is a current time and the one or more times at which the 2D pose information is obtained are one or more current and/or previous times.

8. A data processing apparatus for determining a three-dimensional, 3D, pose, the data processing apparatus comprising circuitry configured to:

obtain two-dimensional, 2D, pose information, the 2D pose information indicating a position of a plurality of joints of an object in each of a plurality of 2D images of the object captured from different respective viewpoints at one or more times;
generate a set of input tokens, each input token indicating a position of one of the joints in one of the images, a classification of the joint and a time at which the image was captured, the position of the joint being defined as a ray passing through the 2D position of the joint in the image and a camera centre of the image;
input the set of input tokens to an encoder of a transformer, the encoder comprising a multi-head self-attention mechanism;
generate a query indicating a classification and a time for one or more joints for which a 3D position is to be predicted; and
input the query and an output of the encoder to a decoder of the transformer to generate, as an output of the decoder, a predicted 3D position of the one or more joints of the query, the decoder comprising a multi-head cross-attention mechanism;
wherein the multi-head self-attention mechanism of the encoder is biased according to at least one of a distance between the rays representing the positions of the joints of the input tokens and a confidence of the 2D position of the joint of each input token.

9. A program for controlling a computer to perform a method according to claim 1.

10. A computer-readable storage medium storing a program according to claim 9.

FIG. 1

FIG. 2

EP 4 530 985 A1

Biased Multi-Head Self-Attention

FIG. 3

TABLE I

AVERAGE ABSOLUTE MPJPE (MM) ON THE HUMAN3.6M AND CMU PANOPTIC DATASETS. † DENOTES METHODS USING OFF-THE SHELF 2D POSE DETECTORS.

| Method | H36M | CMU |
|---|---|---|
| Cross View Fusion [13] | 26.21 | - |
| RANSAC Baseline [5] | - | 33.4 |
| Algebraic [5] | 19.2 | 21.3 |
| Volumetric [5] | **17.7** | **13.7** |
| Remelli et al. [14] | 30.2 | - |
| Epipolar Transformers [3] | 27.1 | - |
| TransFusion [9] | 25.8 | - |
| Bartol et al. [1] | 29.1 | 25.4 |
| Ours | 22.7 | - |
| Ours † | 27.5 | 17.2 |

FIG. 4A

EP 4 530 985 A1

TABLE III

GENERALIZATION ERROR ON THE H36M DATASET. ABSOLUTE MPJPE (MM)

| Method | Dir | Disc | Eat | Greet | Phone | Pose | Purch | Sit | SitD | Smoke | Photo | Wait | Walk | WalkD | WalkT |
|---|---|---|---|---|---|---|---|---|---|---|---|---|---|---|---|
| Tri (HRNet) | 44.6 | 43.5 | 42.2 | 42.5 | 43.7 | 41.6 | 48.5 | **46.8** | **51.7** | 45.4 | 45.7 | 42.3 | 40.3 | 45.6 | 39.8 |
| Ours (HRNet) | **34.7** | **33.3** | **35.3** | **35.0** | **42.6** | **31.2** | **34.1** | 66.3 | 99.6 | **39.5** | **37.3** | **35.2** | **30.5** | **38.0** | **30.1** |

FIG. 4B

TABLE IV
RECONSTRUCTION ERROR ON OCCLUSION-PERSON
WITH FEWER CAMERAS. ABSOLUTE MPJPE (MM).

| Method | Number of Cameras | | |
|---|---|---|---|
| | 2 | 3 | 4 |
| NoFuse | 33.7 | 53.8 | 55.4 |
| RANSAC | 33.7 | 87.5 | 35.0 |
| HeuristicFuse | 38.6 | 26.0 | 23.3 |
| ScoreFuse | 32.7 | 25.7 | 21.4 |
| AdaFuse | - | 26.2 | 19.7 |
| Ours | **30.8** | **22.9** | **19.6** |

FIG. 4C

TABLE V
ABLATION STUDY ON THE COMPONENTS OF OUR FRAMEWORK. WE
REMOVE EACH FEATURE AND TRAIN ON THE PANOPTIC DATASET. WE
REPORT THE 3D POSE ESTIMATION ERROR MPJPE (MM) ON THE
PANOPTIC AND H36M DATASETS.

| Center | Synthetic | Conf | Geometry | Panoptic | Panoptic → H36M |
|---|---|---|---|---|---|
| | | | | 22.4 | 119.5 |
| ✓ | | | | 18.9 | 77.0 |
| ✓ | ✓ | | | 19.3 | 64.0 |
| ✓ | ✓ | ✓ | | 17.7 | 54.4 |
| ✓ | ✓ | | ✓ | 17.1 | 52.9 |
| ✓ | ✓ | ✓ | ✓ | 17.2 | 51.5 |

FIG. 4D

500 — Start

501 — Obtain 2D pose information

502 — Generate input tokens

503 — Input to encoder

504 — Generate query

505 — Input to decoder

506 — End

FIG. 5

EP 4 530 985 A1

| Europäisches Patentamt European Patent Office Office européen des brevets | **EUROPEAN SEARCH REPORT** | Application Number EP 24 19 9471 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2022/245281 A1 (GARENA ONLINE PRIVATE LTD [SG]) 24 November 2022 (2022-11-24)<br>* paragraphs [0001], [0048], [0051] - [0063], [0077] - [0090] *<br>----- | 1,7-10<br><br>2-6 | INV.<br>G06T7/73 |
| A | ANDREAS BAAK: "Retrieval-based Approaches for Tracking and Reconstructing Human Motions",<br>DISSERTATION DER UNIVERSITÄT DES SAARLANDES,<br>,<br>13 November 2012 (2012-11-13), pages 1-157, XP007922376,<br>Retrieved from the Internet:<br>URL:http://scidok.sulb.uni-saarland.de/volltexte/2013/5029/pdf/2012_Baak_Thesis.pdf<br>* the whole document *<br>----- | 1-10 | |
| A | ZHANG BOWEI ET AL: "End-to-end 3D Human Pose Estimation with Transformer",<br>2022 26TH INTERNATIONAL CONFERENCE ON PATTERN RECOGNITION (ICPR), IEEE,<br>21 August 2022 (2022-08-21), pages 4529-4536, XP034237095,<br>DOI: 10.1109/ICPR56361.2022.9956693<br>[retrieved on 2022-11-29]<br>* the whole document *<br>----- | 1-10 | **TECHNICAL FIELDS SEARCHED (IPC)**<br><br>G06T<br>G06V<br>G06N |

The present search report has been drawn up for all claims

| Place of search | Date of completion of the search | Examiner |
|---|---|---|
| Munich | 12 February 2025 | Tillier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 19 9471

This annex lists the patent family members relating to the patent documents cited in  the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | | Publication date |
|---|---|---|---|---|
| WO 2022245281 A1 | 24-11-2022 | TW | 202314641 A | 01-04-2023 |
| | | US | 2024233441 A1 | 11-07-2024 |
| | | WO | 2022245281 A1 | 24-11-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11501462 B2

**Non-patent literature cited in the description**

- **Z. GE** ; **S. LIU** ; **F. WANG** ; **Z. LI** ; **J. SUN**. *YOLOX: Exceeding YOLO series in 2021*, July 2021
- **Y. HE** ; **R. YAN** ; **K. FRAGKIADAKI** ; **S.-I. YU**. Epipolar transformers. *Proceedings of the ieee/cvf conference on computer vision and pattern recognition*, 2020, 7779-7788
- **C. LONESCU** ; **D. PAPAVA** ; **V. OLARU** ; **C. SMINCHISESCU**. Human3.6M: Large scale datasets and predictive methods for 3D human sensing in natural environments. *IEEE Trans. Pattern Anal. Mach. Intell.*, July 2014, vol. 36 (7), 1325-1339
- **K. ISKAKOV** ; **E. BURKOV** ; **V. LEMPITSKY** ; **Y. MALKOV**. Learnable Triangulation of Human Pose. *2019 IEEE/CVF International Conference on Computer Vision (ICCV), Seoul, Korea (South)*, October 2019
- **Y.-B. JIA**. Plücker coordinates for lines in the space. Problem Solver Techniques for Applied Computer Science. *Com-S-477/577 Course Handout*, 2020, vol. 3
- **H. JOO** ; **T. SIMON** ; **X. LI** ; **H. LIU** ; **L. TAN** ; **L. GUI** ; **S. BANERJEE** ; **T. GODISART** ; **B. NABBE** ; **I. MATTHEWS**. Panoptic studio: A massively multiview system for social interaction capture. *IEEE transactions on*, December 2016
- A method for stochastic optimization. **D. P. KINGMA** ; **J. BA. ADAM**. 3rd International Conference on Learning Representations, ICLR 2015, San Diego, CA, USA, May 7-9, 2015, Conference Track Proceedings. 2015, 20150507
- **H. MA et al.** TransFusion: Cross-view fusion with transformer for 3D human pose estimation. *arXiv [cs.CV]*, 18 October 2021, https://www.bmvc2021-virtualconference.com/assets/papers/0016.pd
- **H. MA** ; **Z. WANG** ; **Y. CHEN** ; **D. KONG** ; **L. CHEN** ; **X. LIU** ; **X. YAN** ; **H. TANG** ; **X. XIE**. PPT: token-pruned pose transformer for monocular and multi-view human pose estimation. *European Conference on Computer Vision*, 2022
- **B. MILDENHALL** ; **P. P. SRINIVASAN** ; **M. TANCIK** ; **J. T. BARRON** ; **R. RAMAMOORTHI** ; **R. NG**. NeRF: Representing scenes as neural radiance fields for view synthesis. *ECCV*, 2020

- **J. PLÜCKER**. On a New Geometry of Space. Royal Society
- **H. QIU** ; **C. WANG** ; **J. WANG** ; **N. WANG** ; **W. ZENG**. Cross View Fusion for 3D Human Pose Estimation. *ICCV2019*, 21 January 2020, https://www.semanticscholar.org/paper/7f13c91e8b79608c6f-f2a9908e67467ebf744aee
- **E. REMELLI** ; **S. HAN** ; **S. HONARI** ; **P. FUA** ; **R. WANG**. Lightweight Multi-View 3D Pose Estimation through Camera-Disentangled Representation. *arXiv [cs.CV],*, 05 April 2020, http://arxiv.org/abs/2004.02186
- **V. SITZMANN** ; **S. REZCHIKOV** ; **W. T. FREEMAN** ; **J. B. TENENBAUM** ; **F. DURAND**. Light field networks: Neural scene representations with Single-Evaluation rendering. *Proc. NeurIPS*, 2021
- **K. SUN** ; **B. XIAO** ; **D. LIU** ; **J. WANG**. Deep high-resolution representation learning for human pose estimation. *Proceedings of the IEEE/CVF Conference on Computer Vision and Pattern Recognition*, 2019, 5693-5703
- Attention is all you need. **A. VASWANI** ; **N. SHAZEER** ; **N. PARMAR** ; **J. USZKOREIT** ; **L. JONES** ; **A. N. GOMEZ** ; **L. U. KAISER** ; **I. POLOSUKHIN**. Advances in Neural Information Processing Systems. Curran Associates, Inc., 2017, vol. 30
- **N. VENKAT** ; **M. AGARWAL** ; **M. SINGH** ; **S. TULSIANI**. *Geometry-biased transformers for novel view synthesis*, January 2023
- **Z. ZHANG** ; **C. WANG** ; **W. QIU** ; **W. QIN** ; **W. ZENG**. AdaFuse: Adaptive Multiview Fusion for Accurate Human Pose Estimation in the Wild. *arXiv [cs.CV]*, 26 October 2020, http://arxiv.org/abs/2010.13302
- **G. PAVLAKOS** ; **X. ZHOU** ; **K. G. DERPANIS** ; **K. DANIILIDIS**. Harvesting multiple views for markerless 3D human pose annotations. *2017 IEEE Conference on Computer Vision and Pattern Recognition (CVPR), Honolulu, HI*, July 2017